# EUROPEAN PATENT APPLICATION

(11) **EP 1 258 514 A1**
(43) Date of publication of application: **20.11.2002**
(21) Application number: 02008277.2
(22) Date of filing: 22.04.2002
(51) Int. Cl.: C09G 1/02, C09K 3/14, B24B 31/14, C23F 3/00, B01D 21/01, B24B 1/00, B24B 31/06, H01L 21/306

(54) **Granular abrasive substance for surface treatment of products in general**

(30) Priority: 10.05.2001 IT MI20010962
(71) Applicant: ROLLWASCH ITALIANA S.p.A., 20124 Milano (IT)
(72) Inventor: Mamone, Giancarlo, 20129 Milano (IT)
(74) Representative: Modiano, Guido, Dr.-Ing.

(57) **Abstract**

A granular abrasive substance for the surface treatment of products in general, which comprises a mixture of polyester and abrasive in powder form with a hardening catalyst. The particularity of the invention is constituted by the fact that it comprises, in the mixture, aluminum in the metallic state and its salts, and a pH regulator.

## Description

The present invention relates to a granular abrasive substance for the surface treatment of products in general.

It is known that barrel finishing or tumbling and vibratory finishing or polishing processes are currently used for the surface finishing or polishing of small metallic parts and of products in general; generally, said processes consist in mixing the products to be treated with natural or synthetic granules or particles and in moving the entire mass, so that the granules rub against the products being processed, thus achieving the intended surface treatment.

In barrel finishing or tumbling, which has very ancient origins, movement is transmitted by the rotating barrel in which the mass is placed, while in vibratory finishing, which is currently the most widely used technique, movement is transmitted by appropriately provided vibrating units which make the entire mass vibrate.

Continuous development of these processes, particularly of the vibratory finishing process, has allowed to gradually expand their field of application, passing from metallic findings to larger parts with high requirements of mechanical precision.

Normally, although dry treatments exits, in most applications the treatment is wet and is specifically carried out in the presence of a quantity of water.

A chemical product is frequently added to the water; the nature of the chemical product is quite variable and depends on whether one wishes necessary to perform deburring, fine or coarse lapping, descaling or polishing; moreover, the chemical product can be used to degrease, pickle or protect the parts against corrosion and other collateral phenomena.

In the vibratory finishing or polishing process, which substantially entails loading the machine with the products to be treated, the granules, the chemical product and the necessary amount of water, after the treatment period the slurry is discharged and the entire mass is rinsed; this is followed by unloading and by separation of the products from the granules.

Clearly, at the end of each treatment cycle there is a certain amount of wastewater to be disposed; this wastewater is contaminated due to the presence of the part of the granules that has worn away due to friction against the parts and among the granules, of the part of the metal that has been removed, which occurs as metal but sometimes also in ion form, of any contaminants covering the product to be treated, such as dust, oils and greases, oxides and so forth, and of residues of the chemical product that is used.

It is evident that this wastewater cannot be discharged into the sewage system and must be purified.

In order to solve the problem of purification treatment, an integrated process has already been introduced which allows to recirculate the wastewater in the process after appropriate treatment, thus avoiding the risks and problems of discharging.

In this integrated process, the spent material formed by the wear of the granules, by the material that has detached from the parts being treated and by any spent abrasive material forms sludge which is eliminated by means of a physical process, which can be natural sedimentation, filtration or centrifugation.

Generally, sedimentation usually requires large volumes of water in order to ensure the appropriate time required for the solids to precipitate, while filtration is undoubtedly more effective, but even when using a filter press, the maintenance of the cloths, the separation of the pressed sludge from said cloths and the excessively frequent opening/closure of the filter, which is mostly performed manually, create significant labor problems.

Centrifugation is highly effective, although when the volumes of water involved are large it must be performed continuously, with very high plant costs.

These kinds of solution allow only to eliminate the solid contaminant, and therefore problems are encountered, such as for example difficulty in separating oils and greases, difficulty in using in succession, during the surface finishing treatment, two or more chemical products which might be in contrast with each other, and the fact that not all chemical products employed in vibratory finishing can be recirculated by simple separation of the solid contaminant.

The above mentioned drawbacks of this process of physical separation of the contaminants are offset by the fact that said process allows to have no consumption of chemical products for treatment and accordingly allows a lower cost of the process, which does not require specific tests, analyses and so forth, requires smaller installation spaces, which are particularly small in the case of the centrifuge, and also allows savings by recirculation of the optional vibratory finishing chemical product, which does not have to be added at each treatment cycle.

In order to cope with the problems that arise from the lack of elimination or disposal of the chemical products, recirculation of liquids after chemical-physical treatment has already been introduced with the aim of eliminating not only solid contaminants but also most of all the other chemical substances that are in suspension, in emulsion or even in solution in the vibratory finishing wastewater.

In order to achieve this, suitable chemical products, such as reagents and adsorbents, are used which in practice cause the precipitation of all the above cited contaminants in the form of sludge. The contaminants generally end up at the bottom of a decantation tank, so that they can be separated from the water thus treated. The precipitated sludge must in any case be thickened by subsequent filtration or centrifugation.

This type of treatment allows to treat a very wide range of wastewater types, therefore wastewater with oils and greases, light suspended solids, soapy solutions and residues of acid products, and it is further possible to convey into a single accumulation tank wastewater that arrives from various vibratory finishing cycles, subsequently redistributing it from a single recirculation tank to the various users.

It is also optionally possible to discharge the wastewater into the public sewage system, since statutory parameters are fully met.

These undeniable advantages, however, are offset by considerable complications due to treatment with chemical products, which require greater monitoring on the part of the operator, who must be able to introduce the chemical products in the intended amounts, with the need for constant monitoring of the pH and for the presence of probes, periodic analyses, and so forth.

Finally, one should not ignore the economical aspect, not so much as regards plant investment but rather operating costs, which are unquestionably favorable for merely physical processes.

The aim of the present invention is to provide a granular abrasive substance for the surface treatment of products in general that allows to obtain the advantages that arise from a wastewater treatment that is substantially of the physical type and also eliminates the contaminants that would require chemical-physical treatment.

Within this aim, an object of the present invention is to provide a substance that in practice allows to expand the field of application of physical systems, allowing to treat the wastewater in maximum safety and with a very low operating cost.

Another object of the invention is to provide a substance that allows to have a wastewater treatment that is similar to the treatment of wastewater in a conventional treatment unit, before the wastewater enters the decantation unit or the filter.

Another object of the invention is to provide a granular abrasive substance for the surface treatment of products in general which, by way of its particular constructive characteristics, is capable of giving the greatest assurances of reliability and safety in use.

This aim and these and other objects that will become better apparent hereinafter are achieved by a granular abrasive substance for the surface treatment of products in general, which comprises a mixture of polyester and abrasive in powder form with a hardening catalyst, characterized in that it comprises, in said mixture, aluminum in the metallic state and a pH regulator.

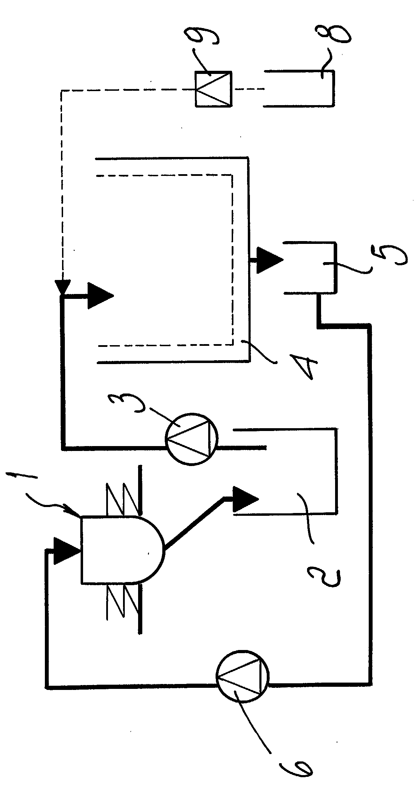

Further characteristics and advantages of the present invention will become better apparent from the following detailed description of some preferred but not exclusive embodiments of the granular abrasive substance for the surface treatment of products in general, and of a treatment plant as illustrated with the aid of the accompanying drawing, wherein the only figure is a schematic view of a treatment plant in which the abrasive substance according to the invention can be employed.

With reference to the figure, the granular abrasive substance for the surface treatment of products in general, according to the invention, is obtained by introducing a new production concept, which consists in adding to the formulation of the granules certain chemical components and elements which, by utilizing the slow wear of the granule, are gradually released and become mixed with the aqueous phase, thus achieving the possibility to use a continuous wastewater treatment that combines the physical filtration treatment with a chemical treatment that derives from an element that is directly inserted in the granule and is thus released in quantities that correspond to those normally used.

In the production process of the granules of the abrasive substance it is necessary to take into account that granules with a polyester binder and granules with a urea-formaldehyde binder are usually provided and that the two types of granule must be treated differently.

In the case of granules with a polyester binder, the abrasive substance is normally produced starting from a mixture of polyester in the liquid-viscous state, to which a certain amount of abrasive in powder form is added; moreover, a suitable catalyst is introduced and the entire mixture is poured into molds in order to obtain the granules in the intended shapes.

The particularity of the invention consists, in a first embodiment, in adding to said mixture, before catalyzing it, a certain amount of aluminum in the form of a very fine powder and of calcium hydrate or another basic substance in small amounts, i.e., enough to cause the solution subsequently formed during vibratory finishing to be alkaline and have a pH between 8 and 9.

Since aluminum in the form of very fine powder, in contact with the oxygen in the air, can cause a chain oxidation reaction to the point of becoming explosive, the aluminum is premixed with a small dose of styrene, which being one of the basic components of the polyester resin does not harm polymerization but actually enhances some mechanical characteristics of the finished part.

The granule thus prepared, once hardened and used in vibratory finishing, wears away as normally occurs during this process and releases a certain amount of aluminum and of its alkalizing agent which regulates pH.

The metal, in contact with water at a pH higher than 8, slowly hydrolyzes and forms a hydrate with the known flocculating properties, and is thus able to incorporate the sedimentable solid particles, which are not the main cause of contamination.

At the outlet of the machine it is optionally sufficient to provide a small addition of polyelectrolyte in order to achieve excellent precipitation and sedimentation by decantation of all contaminants.

The wastewater thus cleared can be recirculated in the vibratory finishing process.

The percentage of aluminum in a preformed part of this type usually varies between 3 and 6%. In order to further improve the rate of complete transformation, it is also possible to avoid using aluminum in the metallic state and use salts thereof instead. Since it is not possible to use a single salt, because all the soluble salts of this metal have an acid or alkaline reaction once they are in solution, a mixture was used of an acid salt, for example aluminum sulfate, which yielded excellent results, with the addition of a stoichiometrically corresponding quantity of a base, constituted for example by an alkaline or alkaline earth hydrate, so as to form an insoluble sulfate in addition to the aluminum hydrate.

A good result was achieved by using calcium and barium hydrates.

An optimum result was achieved by adding to the aluminum sulfate, i.e., to the acid aluminum salt, a stoichiometrically corresponding quantity of another basic salt, such as for example sodium aluminate calculated so as to obtain, in the end, a pH of approximately 8.

The advantage lies in the fact that both salts, the first one having an acid reaction, the latter having an alkaline reaction, cooperate and neutralize each other so as to form the necessary aluminum hydrate.

Therefore, for an equal amount of flocculant produced, the amount of added salts is smaller.

From a practical point of view, an optimum solution has been achieved by using the plant whose layout is shown in the drawing.

The plant has a vibrating machine, designated by the reference numeral 1, which has a discharge toward a wastewater recovery and recirculation tank 2, in which a pump 3 for sending to a filtration unit 4 draws; below the unit there is a tank for collecting and recirculating the cleared wastewater 5; a recirculation pump 6 draws from the tank 5 and returns the product into the vibrating machine 1.

It is optionally possible to provide a tank 8 for a polyelectrolyte, in which a pump for dosing the polyelectrolyte 9 draws and introduces the product in the filtration tank 4.

The simplicity of a plant thus conceived arises from the absence of reaction tanks with associated dosage of chemical products; likewise, it is no longer necessary to monitor the pH, at least until chemical products that require such monitoring are added in the machine.

Granules based on polyester have been produced experimentally and have led to the obtainment of different types of product.

### Example 1

A mixture is prepared which contains:

| | |
|---|---|
| Polyester resin | 27 - 37 parts |
| Styrene | 6 parts |
| Quartz powder | 52 - 62 parts |
| Accelerator | 3 parts |
| Dispersant | 1 part |
| Catalyst | 1 part |

A preparation of aluminum powder with 3% styrene, in an amount between 4 and 8 parts, is added to this mixture.

The mixture is poured into molds and extracted after a few minutes and is already usable after 24 hours of rest. The resulting preformed product does not cause catalysis problems, is compact in the wear test and in general does not exhibit significant differences with respect to the similar formulation, which is normally produced, which contains no aluminum.

Vibratory finishing was performed in circular vibration machines with a useful capacity of 25 liters, with continuous inflow and outflow of water at a flow-rate of approximately 20 1/hour/kg of preformed product.

Tests for flocculation and treatment on the wastewater, leaving the vibrating unit, revealed the typical iridescence of finely divided aluminum, but a slow hydrolysis thereof is also visible and is confirmed by the continuous generation of hydrogen bubbles, according to the following typical reaction:

2Al + 6H₂O = 2Al(OH)₃ + 3 H₂

By adding a polyelectrolyte in the amount of 5 ml/l of 0.2% solution, directly after sampling one observes limited floc generation; after 24 hours floc generation is good but hydrogen is still generated; after 48 hours, floc generation is excellent and there is no hydrogen generation; and after 62 hours, the aluminum is fully hydrolyzed, flocculation is excellent and the water is extremely clear.

### Example 2

A second series of tests had the aim of increasing the pH of the outbound wastewater in order to accelerate hydrolysis of the aluminum. Holding the water for two/three days before clearing and consequent recycling in the production cycle is in fact generally not acceptable where the wastewater flow-rate starts to be high, since storage tanks with a high capacity, i.e., equal to at least four times the daily demand of water, would have been required.

Accordingly, a compound was formed which was similar to the preceding one, but with the alternative addition of four parts of calcium hydrate and two parts of calcium hydrate; the first test yielded a fully negative result, since the lime prevented catalysis or at least slowed it excessively. By reducing the calcium hydrate to 2%, polymerization was possible, although variegation of the granules was noted; in the vibratory finishing test, complete hydrolysis of the aluminum occurred in half the time with respect to the preceding example.

### Example 3

In order to reduce the formation time of the aluminum hydrate, a preparation of aluminum sulfate and sodium aluminate, mixed stoichiometrically at 45:55, obtaining a pH between 7 and 8, was produced. The formulation was as follows:

| | |
|---|---|
| Polyester resin | 27 parts |
| Styrene | 6.5 parts |
| Preparation | 8 parts |
| Powdered quartz | 53 parts |
| Dispersant | 1.5 parts |
| Accelerators | 3 parts |
| Catalyst | 1 part |

Catalysis caused no problems; it was merely necessary to slightly increase the accelerator in order to achieve hardening in the standard time.

Tests for conditioning and clariflocculation of the wastewater leaving the vibrating unit yielded the best results, since no retention times were necessary because it is not necessary to wait for the hydrolysis of the aluminum and therefore the forming of the corresponding hydrate is substantially instantaneous.

### Example 4

An additional series of tests demonstrated that by replacing calcium carbonate as a neutralizer of the aluminum sulfate, excellent flocculation occurred, but in addition to this the sulfate ion is also precipitated and therefore eliminated; by recirculating the wastewater continuously, said ion would have accumulated gradually, increasing the salinity of the water.

The calcium sulfate that is formed also increases the weight of the final floc, facilitating its sedimentation.

A preparation of aluminum sulfate and calcium carbonate in a weight ratio of preferably 7 to 5 but optionally between 1:1 and 4:1, was then prepared and the following formulation was produced:

| | |
|---|---|
| Polyester resin | 27% |
| Powdered quartz | 49% |
| Styrene | 6.5% |
| Dispersant | 1.5% |
| Preparation | 12% |
| Catalyst | 1% |
| Accelerator | 3% |

Experimental tests have shown that it is optionally possible to add the preparation in a percentage between 7 and 20%.

In the case of granules produced starting from a urea-formaldehyde mixture, the aqueous suspension of urea-formaldehyde is catalyzed with an acid before pouring into the molds.

The most widely used of these acids is phosphoric acid.

An excellent catalysis result was found experimentally, in the described research, by using, instead of the pure or diluted acid, acid aluminum phosphate Al(H₂PO₄)₃, pure in solution or mixed with phosphoric acid.

The resulting preformed product has characteristics that are fully identical to the preformed product obtained with the conventional process, but while it wears away during vibratory finishing it releases the aluminum ion.

If one wishes to obtain the indispensable hydrate, it is necessary to neutralize the outgoing wastewater, which at this point is acid.

In order to solve the problem, it was necessary to produce additional granules in which, instead of the abrasive, a mixture of calcium hydrate and carbonate in the maximum possible quantity, depending on castability, was added.

Therefore, substantially the granules are produced with a first fraction (70 to 80% of the total), in which the formulation based on urea-formaldehyde is used with an acid catalyst that at least partly contains acid aluminum phosphate, and a second fraction, whose binder is the polyester resin and whose inert component is calcium carbonate and hydrate for neutralizing the acid environment.

During the process, both preformed products wear away and both the calcium hydrate and the carbonate, by neutralizing the output wastewater, allow the forming of Al(OH)₃.

In this case also, the wastewater, once it has left the vibrating unit, needs only to receive the addition of a minimal amount of polyelectrolyte in order to achieve rapid decantation and separation of the sludge.

### Example 5

In order to perform catalysis, which as mentioned can be performed only in an acid environment, an acid catalyst was prepared which had the following formulation:

| | |
|---|---|
| phosphoric acid 75 | 20% |
| aluminum monophosphate | 40% |
| water | 40% |

The base resin was instead prepared according to the following formulation:

| | |
|---|---|
| Urea resin | 51 ÷ 52.2% |
| Quartz | 42.3 ÷ 43.5% |
| Thiourea | 0.5% |
| Catalyst | 5.0% |

It should be noted that the percentage of aluminum monophosphate can vary from 30 to 60% and the percentage of catalyst can vary from 2 to 6% as a function of the temperature at which catalysis is performed.

The resin/quartz ratio can also vary according to the required degree of abrasiveness.

In order to neutralize the wastewater, a second fraction of granules was produced and obtained by means of the following formulation:

| | |
|---|---|
| Polyester resin | 30% |
| Styrene | 5% |
| Calcium carbonate | 65% |
| Catalyst | quant. suff. |

The granules were mixed in a ratio between 80% urea/20% polyester and 70% urea/30% polyester.

The plant used to manage wastewater recycling is fully equivalent to the one described earlier for polyester-based granules.

The substance according to the present invention provides considerable practical advantages, such as no longer having to manage a plant that always requires a certain amount of monitoring and attention, eliminating the possibility of errors or negligence that might lead to poor quality of the recirculated wastewater, to the point of damaging the result of the vibratory finishing process.

Another advantage is related to the significant reduction in the costs of the chemical products, which can be assessed at approximately 50-70%.

The disclosures in Italian Patent Application No. MI2001A000962 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A granular abrasive substance for the surface treatment of products in general, comprising a mixture of polyester and abrasive in powder form with a hardening catalyst, **characterized in that** it comprises, in said mixture, aluminum in the metallic state and a pH regulator.

2. A granular abrasive substance for the surface treatment of products in general, comprising a mixture of polyester and abrasive in powder form with a hardening catalyst, **characterized in that** it comprises, in said mixture, an acid aluminum salt and a metallic hydrate or a carbonate in a stoichiometrically corresponding quantity.

3. The granular abrasive substance for the surface treatment of products in general, comprising a mixture of polyester and abrasive in powder form with a hardening catalyst, **characterized in that** it comprises, in said mixture, an acid aluminum salt and a basic salt in a stoichiometrically corresponding quantity.

4. A granular abrasive substance for the surface treatment of products in general, **characterized in that** it comprises a first fraction of granules, which are obtained from a mixture of urea-formaldehyde with an acid catalyst containing at least partially acid aluminum phosphate, and a second fraction of granules obtained with a polyester-based resin containing hydrates or carbonates for neutralizing the acid environment created by said acid catalyst.

5. The abrasive substance according to one or more of the preceding claims, **characterized in that** said aluminum in the metallic state is constituted by aluminum in the form of very fine powder, and **in that** said pH regulator is constituted by calcium hydrate or a basic substance in order to obtain a solution with a pH between 8 and 9.

6. The abrasive substance according to one or more of the preceding claims, **characterized in that** it comprises styrene premixed with said aluminum powder.

7. The abrasive substance according to one or more of the preceding claims, **characterized in that** it comprises an amount of aluminum powder between 3 and 6%.

8. The abrasive substance according to one or more of the preceding claims, **characterized in that** said acid aluminum salt is constituted by aluminum sulfate.

9. The abrasive substance according to one or more of the preceding claims, **characterized in that** said metallic hydrate is constituted by calcium hydrate.

10. The abrasive substance according to one or more of the preceding claims, **characterized in that** said metallic hydrate is constituted by barium hydrate.

11. The abrasive substance according to one or more of the preceding claims, **characterized in that** said basic salt is constituted by sodium aluminate.

12. The abrasive substance according to one or more of the preceding claims, **characterized in that** it comprises 27 parts of polyester resin, 6 parts of styrene, 52 parts of quartz powder, 3 parts of accelerator, 1 part of dispersant, 1 part of catalyst, and 4 to 8 parts of a preparation of aluminum powder with 3% styrene.

13. The abrasive substance according to one or more of the preceding claims, **characterized in that** it comprises, in addition to the components according to claim 12, 2 parts of calcium hydrate.

14. The abrasive substance according to one or more of the preceding claims, **characterized in that** it comprises 27 parts of polyester resin, 6.5 parts of styrene, 53 parts of quartz powder, 1.5 parts of dispersant, 3 parts of accelerators, 1 part of catalyst, and 8 parts of a preparation of aluminum sulfate and sodium aluminate in a 45:55 ratio.

15. The abrasive substance according to one or more of the preceding claims, **characterized in that** it comprises 27% polyester resin, 49% quartz powder, 6.5% styrene, 1.5% dispersant, 1% catalyst, 3% accelerator, and 12% of a preparation of a mixture of aluminum sulfate and calcium carbonate.

16. The abrasive substance according to claim 15, **characterized in that** said aluminum sulfate and calcium carbonate are in a ratio between 1:1 and 4:1, preferably 7:5.

17. The abrasive substance according to claim 16, **characterized in that** said aluminum sulfate and calcium carbonate are present in a percentage between 7 and 20% of the resulting mixture.

18. The abrasive substance according to one or more of the preceding claims, **characterized in that** said acid aluminum phosphate is between 30 and 60% in the catalyst to be added in the fraction of granules obtained from a urea-formaldehyde mixture.

19. The abrasive substance according to one or more of the preceding claims, **characterized in that** said catalyst is comprised in a percentage between 2 and 6%.

20. The abrasive substance according to one or more of the preceding claims, **characterized in that** said fraction of polyester-based granules is obtained with calcium carbonate up to 65%.

21. The abrasive substance according to one or more of the preceding claims, **characterized in that** said granules with urea component and said granules with polyester component are comprised between 80:20% and 70:30%.

22. Plant for surface treatment of products with an abrasive substance according to one of the preceding claims, **characterized in that** it comprises: a vibrating machine (1) having a discharge toward a wastewater recovery and recirculation tank (2), in which a pump (3) for delivery to a filtration unit (4) draws, a tank (5) for collecting and recirculating cleared wastewater, and a recirculation pumps (6) which draws from said tank (5) and returns to wastewater into the vibrating machine (1).

23. A surface treatment process of products using the abrasive substance according to claims 1 - 21 in a plant as set forth in claim 22.
